# EUROPÄISCHE PATENTSCHRIFT

(11) **EP 2 540 535 B1**
(45) Veröffentlichungstag und Bekanntmachung des Hinweises auf die Patenterteilung: **29.05.2019**
(21) Anmeldenummer: 12004519.0
(22) Anmeldetag: 15.06.2012
(51) Int. Cl.: B60G 17/02, B60G 21/055

(54) **Stellvorrichtung für eine Kraftfahrzeug-Radaufhängung**
Positioning device for a motor vehicle wheel suspension
Dispositif de réglage pour un véhicule à suspension de roue

(30) Priorität: 01.07.2011 DE 102011106246
(43) Veröffentlichungstag der Anmeldung: 02.01.2013
(73) Patentinhaber: Audi AG, 85045 Ingolstadt (DE)
(72) Erfinder: Schindler, Andreas, 85055 Ingolstadt (DE); Beringer, Heinrich, 85095 Denkendorf (DE); Michel, Wilfried, 93339 Riedenburg (DE)

(56) Entgegenhaltungen:
- DE-A1-102007 007 214
- DE-A1-102008 010 131
- DE-A1-102009 005 898
- DE-A1-102009 052 877
- DE-C- 679 966
- US-A1- 2005 167 932

## Beschreibung

Die vorliegende Erfindung betrifft eine Stellvorrichtung für eine Stabilisatorhälfte eines Querstabilisators für eine Radaufhängung eines Kraftfahrzeugs gemäß dem Oberbegriff des Patentanspruchs 1.

Eine gattungsgemäße Stellvorrichtung beschreibt beispielsweise die DE 10 2007 007 214, bei der ein Elektromotor über ein Zwischengetriebe in Form eines Winkeltriebes mit einem Übersetzungsgetriebe trieblich verbunden ist. Dabei sind die beiden Torsionsstäbe über die senkrechte Fahrzeug-Längsmittelachse hinaus verlängert, und die Torsionsstäbe im sich überdeckenden Bereich verschränkt ausgeführt.

Aus der DE 10 2009 052 877 A1 ist eine Stellvorrichtung bekannt, bei der je Radaufhängungsseite ein Stabilisator mit einem Drehstab und einem auf ein Radführungselement wirkenden Arm vorgesehen ist und ein jeder Drehstab über einen Elektromotor und ein Endübersetzungsgetriebe in seiner Vorspannung verstellbar ist. Eine derartige Anordnung hat den Vorteil, dass die beiden Stabilisatorhälften zum Ausgleich des Fahrzeugniveaus und/oder von Nick- und oder Wankbewegungen des Kraftfahrzeuges gleichsinnig oder gegensinnig entsprechend verstellbar sind. Die Unterbringung der Elektromotore und der Endübersetzungsgetriebe kann jedoch Einbauprobleme ergeben und zum Beispiel eine verminderte Bodenfreiheit des Kraftfahrzeuges verursachen.

Die DE 10 2008 010 131 A beschreibt einen Elektromotor, der auf zwei Stabilisatorhälften wirkt. Um ein Verschwenken der beiden Stabilisatorhälften zu ermöglichen, ist unter anderem ein Kompensationsgetriebe vorgesehen.

In der DE 10 2009 052 877 A1 ist der Elektromotor zusammen mit dem Übersetzungsgetriebe in einem gemeinsamen Gehäuse angeordnet. Dadurch ergibt sich eine bauraumintensive Motor-/Getriebeeinheit, die zu Packageproblemen führen kann.

Aufgabe der Erfindung ist es, eine hinsichtlich der Anordnung in Kraftfahrzeugen baulich und räumlich günstige Stellvorrichtung für eine Stabilisatorhälfte eines Querstabilisators für eine Kraftfahrzeug-Radaufhängung der gattungsgemäßen Art zu schaffen.

Die Lösung dieser Aufgabe gelingt mit den Merkmalen des Patentanspruchs 1. Vorteilhafte und besonders zweckmäßig Weiterbildungen sind in den Unteransprüchen angeführt.

Erfindungsgemäß wird vorgeschlagen, dass ein jeder Elektromotor mit radialem Abstand zum Drehstab angeordnet ist und über je ein Zwischengetriebe auf die zum Drehstab koaxialen Übersetzungsgetriebe abtreibt. Diese Ausbildung hat den Vorteil, dass durch das Zwischengetriebe der Elektromotor jeweils radial von dem korrespondierenden Drehstab weg verlagerbar ist. Der Elektromotor kann zum Beispiel mit Bezug zur Drehstabachse nach oben, nach vorne oder nach hinten je nach baulichen Gegebenheiten im Kraftfahrzeug verlagert werden. Das Zwischengetriebe bewirkt darüber hinaus ein größeres Gesamtübersetzungsverhältnis zwischen Elektromotor und Drehstab, wodurch die Elektromotoren kleiner und gewichtsgünstiger ausgelegt werden können. Das Übersetzungsgetriebe ist im Unterschied zum Elektromotor koaxial zum Drehstab angeordnet. Dadurch kann der Elektromotor äußerst kompakt und damit bauraumsparend ausgeführt werden. Der Elektromotor kann zudem unabhängig vom Übersetzungsgetriebe je nach Bauraumerfordernissen positioniert werden.

In einer besonderen, bauraumsparenden Ausführungsform bildet der Drehstab das Ausgangselement des Übersetzungsgetriebes. Der Drehstab ist daher unmittelbar in trieblicher Verbindung mit dem Übersetzungsgetriebe, und zwar ohne Zwischenschaltung einer zusätzlichen Getriebestufe zwischen dem Drehstab und dem Übersetzungsgetriebe.

Erfindungsgemäß ist das Übersetzungsgetriebe als Hohlwellengetriebe endseitig auf dem der Radaufhängung abgewandten Ende des Drehstabs positioniert. Das Zwischengetriebe kann dabei auf der vom Drehstabende abgewandten Seite über ein hohles Abtriebsrad trieblich mit dem Eingangselement des Übersetzungsgetriebes verbunden sein. Dies bewirkt eine vorteilhafte Verlängerung des Drehstabs, der sich durch das Übersetzungsgetriebe hindurch erstrecken kann. Alternativ kann das Übersetzungsgetriebe jeweils zwischen dem Drehstabende und dem anschließenden Zwischengetriebe angeordnet sein, also eine einheitliche Kraftflussrichtung aufweisen.

Obwohl die antreibenden Bauteile auch in Einzelgehäusen angeordnet und trieblich miteinander verbunden sein können, wird bevorzugt vorgeschlagen, dass jeweils der Elektromotor, das Zwischengetriebe und das Übersetzungsgetriebe in einem gemeinsamem Gehäuse zusammengebaut sind und somit als Vormontageeinheit gefertigt und mit der jeweiligen Stabilisatorhälfte im Kraftfahrzeug einfach verbaubar sind.

Erfindungsgemäß ist der Elektromotor achsparallel zum Drehstab angeordnet. Das Zwischengetriebe ist bevorzugt als Umschlingungstrieb oder als Stirnradtrieb ausgeführt sein kann, um damit den gewünschten, radialen Versatz zwischen Elektromotor und Drehstab herzustellen und um die räumliche Umfangsposition des Elektromotors relativ zum Drehstab zu schaffen.

In einer alternativen Ausgestaltung der Erfindung kann der Elektromotor mit seiner Drehachse jeweils im Wesentlichen quer zum Drehstab angeordnet und das Zwischengetriebe ein Schneckentrieb sein.

Schließlich kann das Übersetzungsgetriebe in an sich bekannter Weise durch ein Planetengetriebe, ein Harmonic-drive-Getriebe, ein Zykloidgetriebe oder einen Schneckentrieb gebildet sein. Diese Getriebe ermöglichen große Übersetzungsverhältnisse (zum Beispiel 100 oder >), die demzufolge kleine und gewichtsgünstige Elektromotore bei hohen Antriebsmomenten auf die Drehstäbe ermöglichen.

Mehrere Ausführungsbeispiele der Erfindung sind im Folgenden anhand der beiliegenden, skizzenhaften Zeichnung näher erläutert. Es zeigen
- Fig. 1: eine Verstellvorrichtung für eine Stabilisatorhälfte eines Querstabilisators für Radaufhängungen von Kraftfahrzeugen, mit einem Elektromotor, einem Zahnradtrieb als Zwischengetriebe und einem auf den Drehstab wirkenden, als Hohlwellengetriebe ausgeführten Übersetzungsgetriebe; und
- Fig. 2: eine zur Fig. 1 alternative Stellvorrichtung mit einem Zwischengetriebe und einem Übersetzungsgetriebe, die beide endseitig des Drehstabs angeordnet sind.

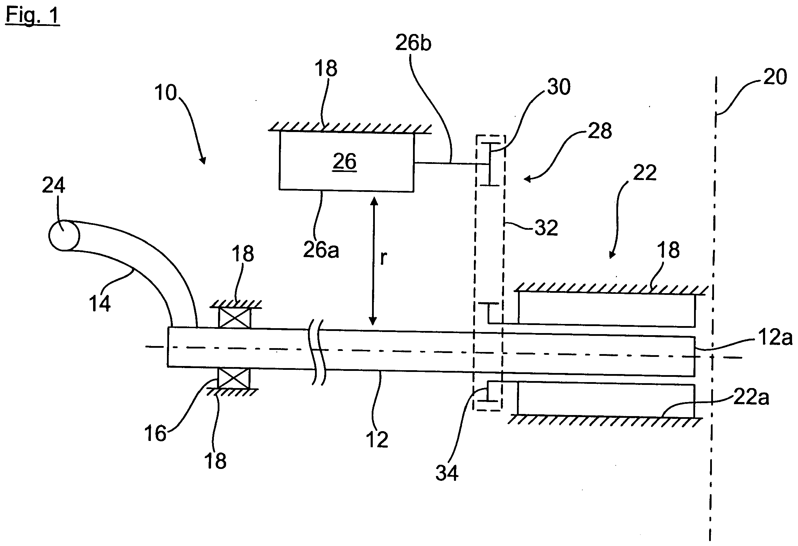

In der Fig. 1 ist die eine Seite 10 einer zweigeteilten Stellvorrichtung bzw. eines Querstabilisators dargestellt, die sich aus einem Drehstab 12 und einem von diesem radial und im Wesentlichen in Fahrzeuglängsrichtung abragenden Arm 14 zusammensetzt. Die andere, nicht dargestellte Seite ist sich spiegelbildlich gleich vorzustellen.

Der zum Beispiel aus Federstahl ausgeführte Drehstab 12 ist benachbart dem Arm 14 über eine Lagerstelle 16 am nur angedeuteten Aufbau 18 des Kraftfahrzeuges drehbar gelagert und an seinem der Fahrzeuglängsmitte 20 zugewandten Ende 12a trieblich mit einem als Hohlwellengetriebe ausgeführten Übersetzungsgetriebe 22 verbunden.

Der Arm 14 ist in an sich bekannter Weise an einem Radführungselement (nicht dargestellt) der Radaufhängung des Kraftfahrzeuges direkt oder unter Zwischenschaltung zum Beispiel einer Koppel über ein Gelenk 24 angelenkt und kann somit über den Drehstab 12 quasi als Zusatzfeder zur Tragfeder und/oder als Stabilisator wirken.

Die Vorspannung bzw. Verdrehung des Drehstabs 12 erfolgt mittels eines Drehmoments auf das Drehstabende 12a, das über einen Elektromotor 26, ein Zwischengetriebe 28 und das Übersetzungsgetriebe 22 ausübbar ist.

Dabei treibt die Antriebswelle 26b des achsparallel zum Drehstab 12 und radial versetzt dazu angeordneten Elektromotors 26 über ein Zahnriemenrad 30, einen Zahnriemen 32 und ein Zahnriemen-Hohlrad 34 als Umschlingungstrieb bzw. das Zwischengetriebe 28 das Eingangselement (nicht dargestellt) des Übersetzungsgetriebes 22 an.

Das Hohlrad 34 ist wie das Hohlwellengetriebe 22 koaxial zum Drehstab 12 und um diesen herum an dessen etwa in der Fahrzeugmitte 20 liegendem Ende 12a positioniert. Das Hohlrad 34, die Getriebeelemente des Hohlwellengetriebes 22 und das Drehstabende 12a sind in dem Gehäuse 22a des Übersetzungsgetriebes 22 drehbar gelagert, während dessen Gehäuse 22a sowie das Gehäuse 26a des Elektromotors 26 am Aufbau 18 befestigt sind.

Der Kraftfluss bei der Verstellung des Drehstabendes 12a der Stabilisatorhälfte 10 verläuft wie aus der Fig. 1 ersichtlich ist von dem in beiden Drehrichtungen über ein elektronisches Fahrwerkregelsystem ansteuerbaren Elektromotor 26 über das Zwischengetriebe 28 und das Übersetzungsgetriebe 22.

Durch eine gleichsinnige Verstellung beider Stabilisatorhälften 10 kann das Fahrzeugniveau angehoben oder abgesenkt werden; ferner kann die Verstellung zum Ausgleich von Nickbewegungen (zum Beispiel bei einem Bremsvorgang) erfolgen. Eine gegensinnige Verstellung kann Wankbewegungen zum Beispiel beim Durchfahren von Kurven entgegenwirken.

Bei der in der Fig. 1 dargestellten Ausführung ist der Elektromotor 26 von der Fahrzeugmitte 20 nach außen versetzt und treibt über das Zwischengetriebe 28 das etwa in Fahrzeugmitte 20 liegende Übersetzungsgetriebe 22 an.

Der Elektromotor 26 könnte dazu auch achsparallel zur Fahrzeugmitte 20 versetzt sein, also etwa in der gleichen Vertikalebene zum Übersetzungsgetriebe 22, auf der Zeichnung also darüber liegend, angeordnet sein.

Ferner könnten das Übersetzungsgetriebe 22, das Zwischengetriebe 28 und/oder der Elektromotor 26 in einem gemeinsamen Gehäuse angeordnet sein, das am Aufbau 18 des Kraftfahrzeuges entsprechend über Schraubverbindungen befestigt ist.

Das Zwischengetriebe 28 könnte auch als Kettentrieb oder bei direkten Zahneingriffen als Stirnradtrieb mit zwei oder mehreren Stirnzahnrädern (nicht dargestellt) ausgeführt sein. Nicht-erfindungsgemäß könnte ferner das Zwischengetriebe 28 als Schneckentrieb ausgelegt sein, wobei das Hohlrad 34 dann durch ein Schneckenrad gebildet wäre und der Elektromotor 26 mit seiner Antriebswelle 26b und einer antreibenden Schnecke entsprechend um 90° mit Bezug zur Drehachse des Drehstabs 12 versetzt anzuordnen wäre.

Das als Hohlwellengetriebe konzipierte Übersetzungsgetriebe 22 kann in an sich bekannter Weise (vergleiche die eingangs genannte DE 10 2007 007 214 A1) als Harmonic-drive-Getriebe ausgeführt sein, das ein großes Übersetzungsverhältnis ermöglicht, das in Verbindung mit dem vorgeschalteten, ebenfalls Drehmoment erhöhendem Zwischengetriebe 28 ein großes Gesamtübersetzungsverhältnis ergibt, so dass die Elektromotore 26 relativ klein und gewichtsgünstig ausgelegt sein können.

Durch das Zwischengetriebe 28 können die Elektromotore 26 der Stellvorrichtungen axial und räumlich so versetzt zu den Drehstäben 12 in das Kraftfahrzeug eingebaut sein, dass unter Vermeidung jeglicher Einbauprobleme stets eine ausreichende Bodenfreiheit herstellbar ist. Die Elektromotoren 26 können räumlich sowohl radial nach oben, nach vorne oder hinten als auch axial mehr oder weniger seitlich der Fahrzeugmitte 20 zu positioniert sein.

Das als Hohlwellengetriebe ausgeführte Übersetzungsgetriebe 22 könnte alternativ auch als Zykloidgetriebe, als Planetengetriebe (zum Beispiel Wolfromgetriebe) oder als Schneckentrieb mit jeweils großem Übersetzungsverhältnis konstruiert sein.

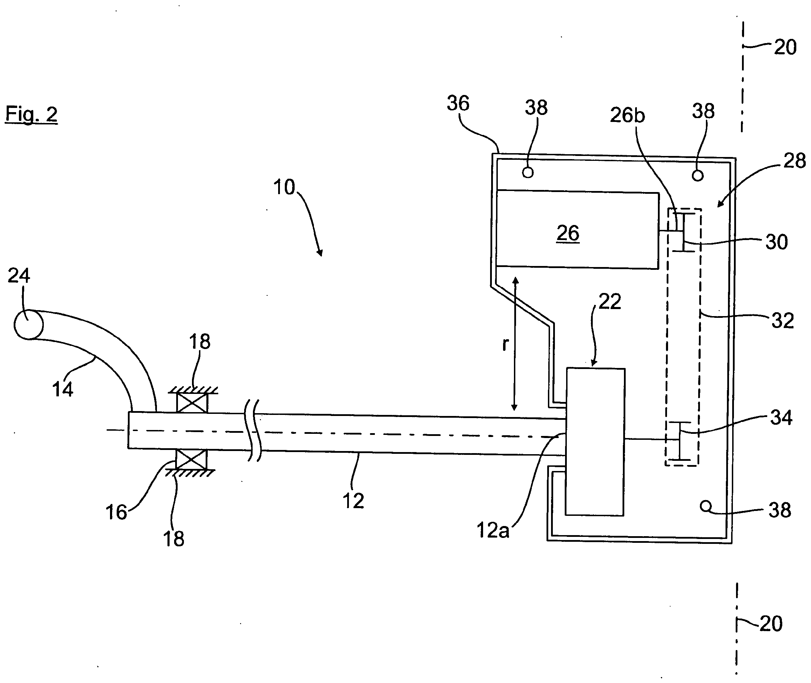

Die Fig. 2 zeigt ein alternatives Ausführungsbeispiel der Erfindung, das nur soweit beschrieben ist, als es sich wesentlich von der Ausführung gemäß Fig. 1 unterscheidet. Funktionell gleiche Teile sind mit gleichen Bezugszeichen versehen.

Gemäß Fig. 2 ist das Zwischengetriebe 28 (Zahnriementrieb) endseitig des Drehstabs 12 etwa in der Fahrzeugmitte 20 angeordnet und treibt über ein einfaches Zahnriemenrad 34 auf das Eingangselement (nicht dargestellt) des im Kraftfluss anschließenden Übersetzungsgetriebes 22 ab, das wiederum abtriebsseitig mit dem Drehstabende 12a gekoppelt ist.

Das Übersetzungsgetriebe 22 und der etwa in der gleichen Vertikalebene angeordnete Elektromotor 26 sind in einem gemeinsamen Gehäuse 36 vorgesehen, das über mehrere Schraubverbindungen 38 mit dem Aufbau 18 des Kraftfahrzeuges fest verbunden ist.

Im Übrigen wird zur Vermeidung von Wiederholungen auf die vorstehenden Ausführungen zur Fig. 1 Bezug genommen.

## Patentansprüche

1. Stellvorrichtung für eine Stabilisatorhälfte eines Querstabilisators für eine Radaufhängung eines Kraftfahrzeugs, mit zumindest einem Elektromotor (26), mit dem über ein Übersetzungsgetriebe (22) ein auf ein Radführungselement der Radaufhängung wirkender Drehstab (12) vorspannbar ist, wobei das Übersetzungsgetriebe (22) als Hohlwellengetriebe endseitig auf dem der Radaufhängung abgewandten Ende des Drehstabs (12) positioniert ist und wobei der Elektromotor (26) über ein Zwischengetriebe (28) auf das Übersetzungsgetriebe (22) abtreibt, das koaxial zum Drehstab (12) angeordnet ist, **dadurch gekennzeichnet, dass** der Elektromotor (26) achsparallel und mit radialem Abstand (r) zum Drehstab (12) angeordnet ist.

2. Stellvorrichtung nach Anspruch 1, **dadurch gekennzeichnet, dass** das Ausgangselement des Übersetzungsgetriebes (22) unmittelbar der Drehstab (12) ist.

3. Stellvorrichtung nach Anspruch 1 oder 2, **dadurch gekennzeichnet, dass** das Zwischengetriebe (28) auf der vom Drehstabende (12a) abgewandten Seite über ein hohles Abtriebsrad (34) trieblich mit dem Eingangselement des Übersetzungsgetriebes (22) verbunden ist.

4. Stellvorrichtung nach einem der vorhergehenden Ansprüche, **dadurch gekennzeichnet, dass** das Übersetzungsgetriebe (22) axial zwischen dem Drehstabende (12a) und dem anschließenden Zwischengetriebe (28) angeordnet ist.

5. Stellvorrichtung nach einem der vorhergehenden Ansprüche, **dadurch gekennzeichnet, dass** jeweils der Elektromotor (26), das Zwischengetriebe (28) und das Übersetzungsgetriebe (22) in einem gemeinsamen Gehäuse (36) zusammengebaut sind.

6. Stellvorrichtung nach einem der vorhergehenden Ansprüche, **dadurch gekennzeichnet, dass** das Zwischengetriebe (28) ein Umschlingungstriebe ist.

7. Stellvorrichtung nach einem der vorhergehenden Ansprüche 1 bis 4, **dadurch gekennzeichnet, dass** das Zwischengetriebe (28) ein Stirnradtrieb ist.

8. Stellvorrichtung nach einem der vorhergehenden Ansprüche, **dadurch gekennzeichnet, dass** das Übersetzungsgetriebe (22) durch ein Planetengetriebe oder ein Harmonic-drive-Getriebe oder ein Zykloidgetriebe oder einen Schneckentrieb gebildet ist.

## Claims

1. Positioning device for a stabiliser half of an anti-roll bar for a wheel suspension of a motor vehicle, with at least one electric motor (26), by means of which via a transmission gearing (22) a torsion bar (12) acting on a wheel guiding element of the wheel suspension can be pretensioned, wherein the transmission gearing (22) is positioned at the end as a hollow shaft gear on the end of the torsion bar (12) facing away from the wheel suspension, and wherein the electric motor (26) via an intermediate gear (28) outputs to the transmission gearing (22) which is arranged to be coaxial to the torsion bar (12), **characterised in that** the electric motor (26) is arranged axially parallel and at a radial distance (r) from the torsion bar (12).

2. Positioning device according to claim 1, **characterised in that** the output element of the transmission gearing (22) is directly the torsion bar (12).

3. Positioning device according to claim 1 or 2, **characterised in that** the intermediate gear (28) is connected by drive on the side facing away from the torsion bar end (12a) via a hollow output gear (34) to the input element of the transmission gearing (22).

4. Positioning device according to any of the preceding claims, **characterised in that** the transmission gearing (22) is arranged axially between the torsion bar end (12a) and the adjoining intermediate gear (28).

5. Positioning device according to any of the preceding claims, **characterised in that** the electric motor (26), the intermediate gear (28) and the transmission gearing (22) respectively are assembled in a common housing (36).

6. Positioning device according to any of the preceding claims, **characterised in that** the intermediate gear (28) is a belt gear.

7. Positioning device according to any of the preceding claims 1 to 4, **characterised in that** the intermediate gear (28) is a spur gear drive.

8. Positioning device according to any of the preceding claims, **characterised in that** the transmission gearing (22) is formed by a planetary gear or a Harmonic Drive gear or a cycloid gearing or a worm gear drive.

## Revendications

1. Dispositif de réglage pour une moitié de stabilisateur d'un stabilisateur transversal pour une suspension de roue d'un véhicule automobile, avec au moins un moteur électrique (26), avec lequel une barre de torsion (12) agissant sur un élément de guidage de roue de la suspension de roue est précontrainte par le biais d'un engrenage de transmission (22), dans lequel l'engrenage de transmission (22) est positionné en tant qu'engrenage d'arbre creux côté extrémité sur l'extrémité éloignée de la suspension de roue de la barre de torsion (12) et dans lequel le moteur électrique (26) entraîne par le biais d'une transmission intermédiaire (28) sur l'engrenage de transmission (22) qui est agencé coaxialement à la barre de torsion (12), **caractérisé en ce que** le moteur électrique (26) est agencé de manière parallèle à l'axe et à distance radiale (r) de la barre de torsion (12).

2. Dispositif de réglage selon la revendication 1, **caractérisé en ce que** l'élément de sortie de l'engrenage de transmission (22) est directement la barre de torsion (12).

3. Dispositif de réglage selon la revendication 1 ou 2, **caractérisé en ce que** la transmission intermédiaire (28) est raccordé sur le côté éloigné de l'extrémité de barre de torsion (12a) par le biais d'une roue de sortie (34) creuse en entraînement à l'élément d'entrée de l'engrenage de transmission (22).

4. Dispositif de réglage selon l'une quelconque des revendications précédentes, **caractérisé en ce que** l'engrenage de transmission (22) est agencé axialement entre l'extrémité de barre de torsion (12a) et la transmission intermédiaire (28) contigu.

5. Dispositif de réglage selon l'une quelconque des revendications précédentes, **caractérisé en ce que** respectivement le moteur électrique (26), la transmission intermédiaire (28) et l'engrenage de transmission (22) sont assemblés dans un boîtier (36) commun.

6. Dispositif de réglage selon l'une quelconque des revendications précédentes, **caractérisé en ce que** la transmission intermédiaire (28) est un mécanisme d'enroulement.

7. Dispositif de réglage selon l'une quelconque des revendications précédentes 1 à 4, **caractérisé en ce que** la transmission intermédiaire (28) est un mécanisme de roue avant.

8. Dispositif de réglage selon l'une quelconque des revendications précédentes, **caractérisé en ce que** l'engrenage de transmission (22) est formé par un engrenage planétaire ou un engrenage Harmonic drive ou un engrenage cycloïde ou un engrenage à vis sans fin.
